Europäisches Patentamt

European Patent Office

Office européen des brevets

(19)

(11) Publication number : **0 287 637 B1**

# EUROPEAN PATENT SPECIFICATION

(12)

(45) Date of publication of patent specification :
08.04.92 Bulletin 92/15

(51) Int. Cl.$^5$ : **G11B 20/10, // G11B5/09**

(21) Application number : **87907174.4**

(22) Date of filing : **05.10.87**

(86) International application number :
**PCT/US87/02516**

(87) International publication number :
**WO 88/02915 21.04.88 Gazette 88/09**

(54) **MAGNETIC DISK WRITE PRECOMPENSATION.**

(30) Priority : **17.10.86 US 920001**
**17.10.86 US 920004**

(43) Date of publication of application :
**26.10.88 Bulletin 88/43**

(45) Publication of the grant of the patent :
**08.04.92 Bulletin 92/15**

(84) Designated Contracting States :
**BE DE FR GB IT NL SE**

(56) References cited :
**JP-A-61 156 574**
**IBM Technical Disclosure Bulletin, vol. 22, no.**
**5, October 1979, New York, US, D. J. Malone:**
**"Dynamic write precompensation", page 2091**
**Patent Abstracts of Japan, vol. 7, no. 260**
**(P-237)(1405), 18 November 1983 & JP-A-58**
**141 410**
**Electronics International, vol. 55, no. 12, June**
**1982, New York, US, T. Stout et al.:**
**"Winchester electronic functions fit on four**
**high-speed chips", pages 117-123**

(56) References cited :
**IBM Technical Disclosure Bulletin, vol. 26, no.**
**10A, March 1984, New York, US, J. A. Danen et**
**al.: "Write data wrap test", page 4879**
**Patent Abstracts of Japan, vol. 9, no. 54**
**(P-340)(1777), 8 March 1985, & JP-A-59 191 117**
**Patent Abstracts of Japan, vol. 6, no. 168**
**(P-139)(1046), 2 September 1982, & JP-A-57**
**86119**

(73) Proprietor : **UNISYS CORPORATION**
**P.O. Box 500**
**Blue Bell, PA 19424-0001 (US)**

(72) Inventor : **STAMNESS, Jesse, I.**
**26010 New Bridge Dr.**
**Los Altos Hills, CA 94022 (US)**
Inventor : **MORROW, Raymond, W.**
**1430 Montego Dr.**
**San Jose, CA 95120 (US)**
Inventor : **ASATO, Edward, E.**
**647 Endicott Dr.**
**Sunnyvale, CA 94037 (US)**

(74) Representative : **Eisenführ, Speiser & Strasse**
**Martinistrasse 24**
**W-2800 Bremen 1 (DE)**

## Description

The present invention relates to a magnetic media storage system and a method for providing write precompensation in such a magnetic media storage system.

As is well known, disk drives are an important part of most modern day computer systems and there is a continuing effort to increase the storage density and reliability of such disk drives at minimum cost. As is also well known, a major problem with magnetic disk drives arises as a result of the "bit shift" occurring because of the crowding of flux reversals at high densities. Bit shift is also affected by the encoding pattern being recorded as well as by electrical and mechanical noise. During detection of the magnetically stored data, the presence of bit shift causes a bit to be detected at a time shifted by a certain amount from the expected time of detection, which, if sufficiently large compared to the bit-cell time, can cause data errors.

Known approaches for overcoming the bit shift problem (for example, see US-A-4,245,263, 4,481,549 and 4,607,295) involve the use of what is commonly referred to as "write precompensation" which attempts to eliminate bit shift by employing predetermined precompensation of the digital data prior to its being written on the magnetic medium. These known write precompensation approaches rely on head/media performing in accordance with relatively narrow specifications. This can cause a severe yield problem during manufacture, particularly for high density systems where tolerances are tight. In addition, this reliance on narrow head/media performance specifications can increase the likelihood of uncorrectable failure, since relatively small changes in head/media characteristics after installation can defeat the write precompensation provided.

A further write precompensation system is known from IBM Technical Disclosure Bulletin, vol. 22, no. 5, October 1979, (New York), D.J. Malone: "Dynamic write precompensation", page 2091, which forms the closest prior art. The operation of this known system is such that, before each writing of a record on a selected track, the precompensation data is read from the header of this selected track and then loaded into a write encode circuitry corresponding to the head/track combination to be used for writing. However, such an operation can significantly increase disk writing times in a disadvantageous manner.

JP-A-61156574 discloses a write read-out controlling circuit of a magnetic disk driving device for inputting a digital parameter at every individual head disk assembly, for controlling a pre-shift quantity and a write current at the time of write of information, and for producing a signal amplification degree and a wave form control constant at the time of read-out, at every magnetic head.

The performing of the precompensation in terms of patterns, clocking and flux changes is known from Electronics International, vol. 55, no. 12, June 1982, New York, T. Stout et al., "Winchester electronic functions fit on four high-speed chips", pages 117-123.

It is an object of the present invention to provide an improved magnetic disk write precompensation.

To achieve this object, according to the invention, a magnetic media storage system is provided, comprising:

– a head/media assembly including a plurality of head/media combinations for writing and reading digital data, said assembly having media on which write precompensation data is recorded, said write precompensation data defining write precompensation characteristics for said head/media combinations taking into account performance differences among said head/media combinations;

– read/write means for performing a writing operation on said media; and

– write precompensation means for providing write precompensation for said writing operation;

– said read/write means being operative to perform said writing operation in a manner which takes into account the selected head/media combination as well as the data pattern of the data to be written; characterized by

– controller means controlling said head/media combinations and including said read/write means and said write precompensation means;

– said precompensation means having write precompensation storage means for storing write precompensation data;

– means for transferring the write precompensation data recorded on said media to said write precompensation storage means for storage therein prior to the performance of writing operations; and

– said write precompensation means being operative prior to the performance of a writing operation by a selected head/media combination for accessing from said write precompensation storage means selected bit-shift-write precompensation data corresponding to the selected head/media combination and also to the pattern of data to be written;

– said read/write means being responsive to said selected bit-shift-write compensation data. The invention also relates to a method for providing write precompensation in a magnetic media storage system having a head/media assembly including a plurality of head/media combinations for writing and reading digital data, wherein said head/media combinations exhibit relatively wide variations in performance characteristics, said method comprising:

– recording write precompensation data on media of said assembly defining write precompensation characteristics for said head/media combinations taking into account said variations in performance;

– for each writing operation to be performed by a selected head/media combination, accessing from said write precompensation data selected bit-shift-write precompensation data corresponding to the selected head/media combination as well as to the data pattern to be written;

– deriving from said selected write precompensation data the bit-shift-write precompensation modifications, if any, to be provided during writing with the selected head/media combination; and

– performing said writing operation using the derived write precompensation modifications; characterized by the further steps of

– prior to the performance of writing operations, transferring the write precompensation data recorded on said media to a controller;

– storing the transferred write precompensation data in said controller; and

– for each writing operation to be performed by a selected head/media combination, accessing from said write precompensation data transferred to said controller said selected bit-shift-write precompensation data.

Thus according to the invention, write precompensation data is recorded on the head/disk assembly (HDA) of each disk drive indicating the performance characteristics of each of the plurality of head/media combinations provided by the HDA. This write precompensation data may, for example, be recorded on the surface analysis tracks typically provided on an HDA. When the system is turned on, the head/media write precompensation data recorded on the HDAs is read into the disk drive controller. Then, during each writing operation, this write precompensation data is accessed to provide a "tailored" write precompensation which not only takes into account the particular data pattern to be written and the track on which the data is to be written, but also takes into account the head/media performance of the particular head to be used for writing.

Further advantageous embodiments of the invention are defined in the subclaims 2 to 11 and 13 to 21.

This invention can be morefully understood from the following detailed description when taken in conjunction with the acompanying drawings, in which:

Fig. 1 is a schematic block diagram illustrating a conventional disk drive system to which the preferred embodiment of the invention may be applied;

Fig. 2 is an electrical block diagram illustrating a disk controller incorporating a particular preferred embodiment of the invention;

Fig. 3 is an electrical block diagram illustrating the construction and arrangement of the write precompensation circuitry 26 in Fig. 1; and

Fig. 4 is an electrical block diagram illustrating the recording of write precompensation data on a disk drive and the diagnosing of head/media performance.

Like characters and numbers refer to like elements throughout the figures of the drawings.

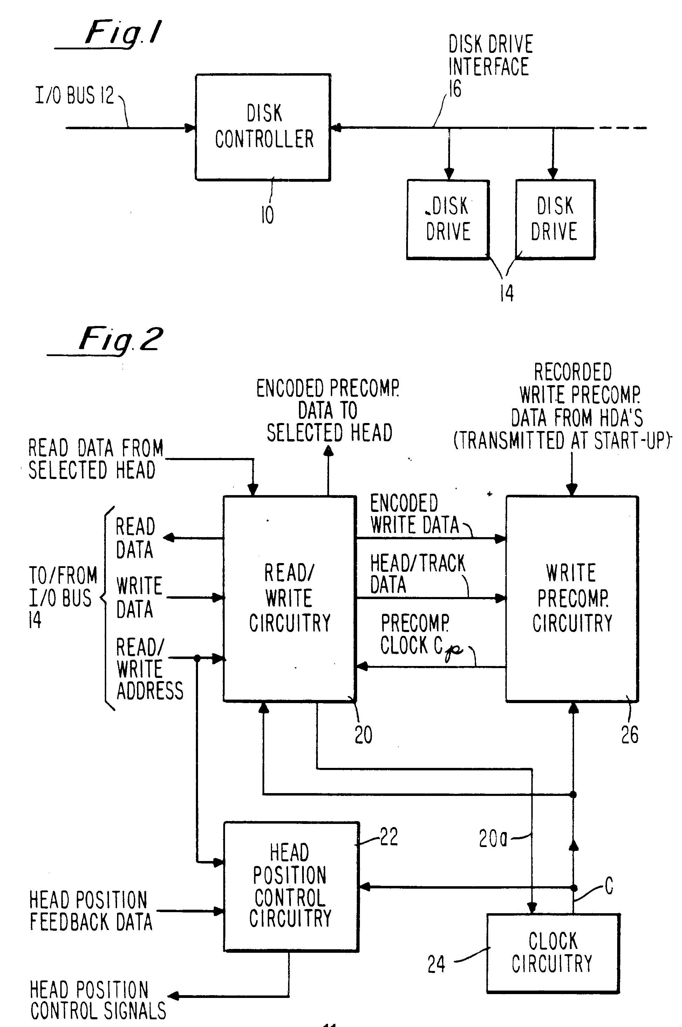

Referring initially to Fig. 1, illustrated therein is a conventional disk drive system comprising a disk controller 10 having an input/output bus 12 and communicating with a plurality of disk drives 14 via a disk drive interface 16. As is conventional, each disk drive 14 includes a head/disk assembly (HDA) providing a plurality of controllable head/media combinations for reading and/or writing on selected tracks of the HDA.

Fig. 2 illustrates how a preferred embodiment of the invention may be incorporated in the disk controller 10 of Fig. 1. As shown in Fig. 2, the disk controller includes conventional read/write circuitry 20 which communicates with the HDA of each disk drive to provide for reading and writing of digital data on the disks at locations specified by a read/write address. As is typical, the disk controller includes head position control circuitry 22 responsive to applied read/write addresses and disk head position feedback data from the HDAs for controlling head positioning. In accordance with the invention, the disk controller further includes write precompensation circuitry 26 which, in response to encoded write data and head/track data provided by read/write circuitry 20, generates a write data precompensation clock $C_p$ which is applied to the read/write circuitry 20 for use in providing write precompensation for data to be written on the disk drives. Clock circuitry 24 in Fig. 2 serves to provide clocking for the various components of the disk controller in a conventional manner. As is also conventional, clock circuitry 24 receives signals $20_a$ from the read/write circuitry 20 related to disk drive operation for controlling clocking.

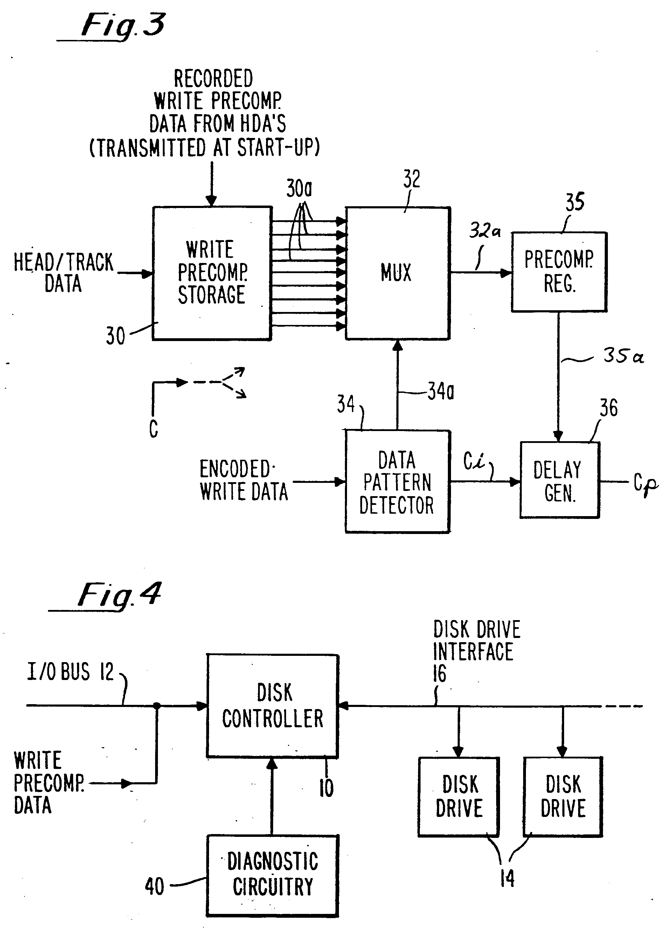

FIG. 3 illustrates the construction and arrangement of the write precompensation circuitry 26 illustrated in block form in FIG. 2. As shown, the write precompensation circuitry 26 includes write precompensation storage 30 (which for example may be a RAM) into which is stored, at start-up time, the write precompensation data recorded on the HDAs. This may be accomplished, for example, using the read/write circuitry 20 to read out the recorded write precompensation data from the surface analysis tracks of each HDA into the write precompensation storage 30. This write precompensation data indicates the data pattern-sensitive write precompensation to be provided for each head/media combination. For example, the write precompensation data recorded on each HDA may contain ten sets of write precompensation data respectively corresponding to the write precompensation to be provided for ten different types of head/media performance characteristics encompassing a relatively wide range of acceptable performance characteristics, each head/media combination of the HDA being assigned the set to which it most nearly corresponds.

As indicated in FIG. 3, prior to each writing operation, head/track selection data is applied to the write precompensation storage 30 indicating the particular head and track (and thus the particular head/media combination) with respect to which writing is to be performed. As is well known, writing of digital data in a track of a magnetic disk typically involves the use of a magnetic head to produce variably spaced magnetic flux-changes along the track in a pattern representative of the digital data to be recorded. Accordingly, in response to the applied head/track selection data, the write precompensation storage 30 outputs a corresponding set of recording time modification signals 30a representing the various possible flux change recording time modifications which may be provided when writing a flux change using the selected head and track. More specifically, in the preferred embodiment, each of these signals 30a indicates the write precompensation modification to be provided for recording a flux change using the selected head and track for a respective one of various possible data patterns which may occur immediately preceding and following the flux change to be recorded. For example, if it is assumed that the well known 2/7 write encoding pattern is employed for recording data, the signals 30a would represent the respective write precompensation modification values to be provided for nine different data pattern possibilities which could be present with respect to a flux change to be recorded when a 2/7 encoding pattern is employed.

As shown in FIG. 3, selection of one of the signals 30a is accomplished by applying the recording time modification signals 30a provided by the write precompensation storage 30 to a multiplexor 32 which provides an output 32a representative of a selected one of the applied signals 30a. The selection made by the multiplexor 32 is determined in response to the value of a data pattern selection signal 34a received from a data pattern detector 34 to which the encoded write data from the read/write circuitry in FIG. 2 is applied. This data pattern selection signal 34a is determined based on the detection by the data pattern detector 34 of the particular flux change patterns immediately preceding and following the flux change to be recorded.

It will thus be understood that the resulting selected multiplexor output signal 32a in FIG. 3 provided by the preferred embodiment for use in recording each flux change indicates the recording time modification (if any) which is to be provided when recording a flux change. A particular advantage of this resulting selected multiplexor output signal 32a achieved by the preferred embodiment is that it is especially "tailored" to the selected head/media combination, since the particular set of flux change recording time modification signals 30a produced by the write precompensation storage 30 in FIG. 3 in response to the applied head/track selection data is especially chosen based on the writing and reading characteristics of the respective head/media combination, the required data for this purpose having been stored in the write precompensation storage 30 at start-up time, as described previously.

Continuing with the description of the particular preferred embodiment of the invention illustrated in FIG. 3, the multiplexor output signal 32a produced by the multiplexor 32 is stored in a precompensation register 35 whose output 35a is in turn applied to a delay generator 36 for selecting the delay to be provided for an input clock signal Ci. The input clock Ci is provided by the data pattern detector 34 based upon the time at which each flux change of the data pattern would be recorded if no precompensation were present. Since the precompensated flux change recording time may be earlier as well as equal to or later than the no precompensation recording time, the clock signal Ci is chosen to occur at an appropriate predetermined time earlier than the no precompensation recording time so that the delay generator 36 can produce a resulting precompensated clock Cp (for feeding to the read/write circuitry 20 in FIG. 2) which is capable of providing the full range of flux change recording time modifications indicated by the selected set of signals 30a provided by the write precompensation storage 30. Using a 2/7 write encoding pattern, the total delay range providable by the delay generator 36 may, for example, be 15 nanoseconds.

FIG. 4 generally illustrates how write precompensation data may be recorded on an HDA and also how head/media performance can be determined. It will be understood from FIG. 4 that head/media write precompensation data can be recorded, on an HDA disk of a disk drive 14 in the same way as other media-related data is conventionally recorded, that is, by appropriately applying the write precompensation data to the controller 10 for writing on the surface analysis tracks of the disks.

As is also conventional, diagnostic circuitry such as illustrated by block 40 in FIG. 4 can be employed in conjunction with the controller 10 to determine whether the recorded write precompensation data for a head/media combination needs to be corrected. For example, if the diagnostic circuitry 40 indicates that the error rate produced by a particular head/media combination is excessive, corrected write precompensated data for that head/media combination can be recorded on the respective disk to replace the previous write precompensation data which produced the excessive error rate. This provides the very important advantage of permitting a head/media combination whose characteristics have degraded to the point where it produces an unacceptable error rate to be brought back into acceptable operation simply by changing its respective recorded write precompensation data without having to remove the disk drive unit for an expensive and time-consuming head replacement, as is now conventionally required.

## Claims

1. A magnetic media storage system comprising:
– a head/media assembly (14) including a plurality of head/media combinations for writing and reading digital data, said assembly having media on which write precompensation data is recorded, said write precompensation data defining write precompensation characteristics for said head/media combinations taking into account performance differences among said head/media combinations;
– read/write means (20) for performing a writing operation on said media; and
– write precompensation means (26) for providing write precompensation for said writing operation;
– said read/write means (20) being operative to perform said writing operation in a manner which takes into account the selected head/media combination as well as the data pattern of the data to be written; characterized by
– controller means (10) controlling said head/media combinations and including said read/write means (20) and said write precompensation means (26);
– said precompensation means (26) having write precompensation storage means (30) for storing write precompensation data;
– means (12) for transferring the write precompensation data recorded on said media to said write precompensation storage means (30) for storage therein prior to the performance of writing operations; and
– said write precompensation means (26) being operative prior to the performance of a writing operation by a selected head/media combination for accessing from said write precompensation storage means (30) selected bit-shift-write precompensation data (32a) corresponding to the selected head/media combination and also to the pattern of data to be written;
– said read/write means (20) being responsive to said selected bit-shift-write compensation data (32a).

2. The system in accordance with claim 1, including means for recording write precompensation data on said media.

3. The system in accordance with claim 1, including means (34) for determining whether the recorded write precompensation data needs to be corrrected.

4. The system in accordance with claim 3, including means for changing said recorded write precompensation data.

5. The system in accordance with claim 1, wherein the recorded write precompensation data is stored in said write precompensation storage means (30) at start-up time.

6. The system in accordance with claim 1, wherein said head/media assembly is a disk/head assembly (14), each disk of said assembly containing one or more heads cooperating therewith for reading and writting data in one or more tracks of the disk.

7. The system in accordance with claim 1, wherein the recorded write precompensation data comprises a plurality of sets of write precompensation data (30a) respectively corresponding to the write precompensation data to be provided for a plurality of different types of acceptable head/media performance characteristics, and wherein said selected write precompensation data (32a) comprises one of said sets chosen based on said selected head/media combination.

8. The system in accordance with claim 1, wherein said selected write precompensation data (32a) comprises a plurality of write precompensation signals representing pattern-sensitive modifications to be employed when writing data using said selected head/media combination.

9. The system in accordance with claim 8, wherein said write precompensation means (26) includes selecting means (32) for successively selecting one of said write precompensation signals (30a) in response to the data to be written, and generating means (36) responsive to the selected write precompensation signal (32a) for generating a precompensated clock (Cp) which is applied to said read/write means (20) for controlling writing by said selected head/media combination.

10. The system in accordance with claim 9, wherein data is written on said media as variably spaced magnetic flux changes, and wherein each write precompensation signal (30a) selected by said selecting means (32) is made based on the data patterns occuring in the vicinity of the flux change to be written.

11. The system in accordance with claim 10, wherein said write precompensation signals respectively indicate the timing modification to be provided when writing a ftux change with the selected head/media combination for various possible data patterns which may occur immediately preceding and following the flux change to be written.

12. A method for providing write precompensation in a magnetic media storage system having a head/media assembly (14) including a plurality of head/media combinations for writing and reading digital data, wherein said head/media combinations exhibit relatively wide variations in performance characteristics, said method comprising:

– recording write precompensation data on media of said assembly (14) defining write precompensation characteristics for said head/media combinations taking into account said variations in performance;

– for each writing operation to be performed by a selected head/media combination, accessing from said write precompensation data selected bit-shift-write precompensation data (32a) corresponding to the selected head/media combination as well as to the data pattern to be written;

– deriving from said selected write precompensation data the bit-shift-write precompensation modifications, if any, to be provided during writing with the selected head/media combination; and

– performing said writing operation using the derived write precompensation modifications; characterized by the further steps of

– prior to the performance of writing operations, transferring the write precompensation data recorded on said media to a controller (10);

– storing the transferred write precompensation data in said controller (10); and

– for each writing operation to be performed by a selected head/media combination, accessing from said write precompensation data transferred to said controller (10) said selected bit-shift-write precompensation data (32a).

13. The method in accordance with claim 12, wherein said head/media assembly is a disk/head assembly (14), each disk of said assembly containing one or more heads cooperating therewith for reading and writing data in one or more tracks of the disk.

14. The method in accordance with claim 13, wherein said transferring occurs at start-up time.

15. The method in accordance with claim 12, including the step of determining whether the recorded write compensation data needs to be corrected.

16. The method in accordance with claim 15, including the step of changing the recorded write precompensation data if said determining indicates correction is needed.

17. The method in accordance with claim 12, wherein the recorded write precompensation data comprises a plurality of sets of write precompensation data (30a) respectively corresponding to the write precompensation data to be provided for a plurality of different types of acceptable head media performance characteristics.

18. The method in accordance with claim 12, wherein said selected write precompensation data (32a) comprises a plurality of write precompensation signals representing pattern-sensitive modifications to be employed when writting data using said selected head/media combination.

19. The method in accordance with claim 18, wherein said deriving includes successively selecting one of said write precompensation signals in response to the data to be written and generating a precompensated clock (Cp) in response thereto.

20. The method in accordance with claim 19, wherein data is written on said media as variably spaced magnetic flux changes, and wherein each selection made by said selecting is based on the data patterns occurring in the vicinity of the flux change to be written.

21. The method in accordance with claim 20, wherein said write precompensation signals respectively indicate the timing modification to be provided when writting a flux change with the selected head/media combination for various possible data patterns which may occur immediately preceding and following the flux change to be written.

## Patentansprüche

1. Magnetmediaspeichersystem mit:

– einer Kopf/Media-Anordnung (14) mit mehreren Kopf/Media-Kombinationen zum Schreiben und Lesen von digitalen Daten, wobei die Anordnung Media hat, auf denen Schreibvorkompensierungsdaten aufgezeichnet werden, wobei die Schreibvorkompensierungsdaten Schreibvorkompensierungseigenschaften für die Kopf/Media-Kombinationen unter Berücksichtigung der Leistungsdifferenzen zwischen den Kopf/Media-Kombinationen definieren;

– einer Lese/Schreib-Einrichtung (20) zur Durchführung einer Schreiboperation auf den Media; und

– einer Schreibvorkompensierungseinrichtung (26) zur Erzeugung einer Schreibvorkompensierung für die Schreiboperation;

– wobei die Lese/Schreib-Einrichtung (20) die Schreiboperation in einer Weise durchführt, die die ausgewählte Kopf/Media-Kombination sowie das Datenmuster der zu schreibenden Daten in Betracht zieht; gekennzeichnet durch

– eine Controllereinrichtung (10), die die Kopf/Media-Kombinationen steuert und die Lese/SchreibEinrichtung (20) und die Schreibvorkompensierungseinrichtung (26) enthält;

– die Vorkompensierungseinrichtung (22) mit einer Schreibvorkompensierungsspeichereinrichtung (30) zur Speicherung von Schreibvorkompensierungsdaten;

– eine Einrichtung (12) zur Übertragung der auf den Media aufgezeichneten Schreibvorkompensierungsdaten an die Schreibvorkompensierungsspeichereinrichtung (30) zur Abspeicherung darin vor der Durchführung der Schreiboperationen; und

– die Schreibvorkompensierungseinrichtung (26), die vor der Durchführung einer Schreiboperation durch eine ausgewählte Kopf/Media-Kombination betrieben wird, um in der Schreibvorkompensierungsspeichereinrichtung (30) auf ausgewählte Bitverschiebungsschreibvorkompensierungsdaten (32a) zuzugreifen, die der ausgewählten Kopf/Media-Kombination und ebenfalls dem Muster der zu schreibenden Daten entsprechen;
– wobei die Lese/Schreibeinrichtung (20) auf die ausgewählten Bitverschiebungsschreibkompensationsdaten (32a) anspricht.

2. System nach Anspruch 1, mit einer Einrichtung zur Aufzeichnung der Schreibvorkompensierungsdaten auf den Media.

3. System nach Anspruch 1, mit einer Einrichtung (34), die bestimmt, ob die aufgezeichneten Schreibvorkompensierungsdaten korrigiert zu werden brauchen.

4. System nach Anspruch 3, mit einer Einrichtung zur Veränderung der aufgezeichneten Schreibvorkompensierungsdaten.

5. System nach Anspruch 1, bei welchem die aufgezeichneten Schreibvorkompensierungsdaten in der Schreibvorkompensierungsspeichereinrichtung (30) zum Startzeitpunkt gespeichert werden.

6. System nach Anspruch 1, bei welchem die Kopf/Media-Anordnung eine Scheiben/Kopf-Anordnung (14) ist, wobei jede Scheibe der Anordnung einen oder mehrere Köpfe enthält, die mit dieser zusammenwirken, um Daten in einer oder mehreren Spuren der Diskette zu lesen und zu schreiben.

7. System nach Anspruch 1, bei welchem die aufgezeichneten Schreibvorkompensierungsdaten mehrere Sätze von Schreibvorkompensierungsdaten (30a) umfassen, die jeweils den Schreibvorkompensierungsdaten entsprechen, die für mehrere unterschiedliche Arten von akzeptablen Kopf/Media-Leistungseigenschaften vorzusehen sind, und bei welchem die ausgewählten Schreibvorkompensierungsdaten (32a) einen der Sätze, ausgewählt auf der Grundlage der ausgewählten Kopf/Media-Kombination, aufweisen.

8. System nach Anspruch 1, bei welchem die ausgewählten Schreibvorkompensierungsdaten (32a) mehrere Schreibvorkompensierungssignale aufweisen, die auf die Muster ansprechende Änderungen repräsentieren, die beim Schreiben der Daten unter Benutzung der ausgewählten Kopf/Media-Kombination zu verwenden sind.

9. System nach Anspruch 8, bei welchem die Schreibvorkompensierungseinrichtung (26) eine Auswahleinrichtung (32) zur aufeinanderfolgenden Auswahl von einem der Schreibvorkompensierungssignale (30a) als Antwort auf die zu schreibenden Daten und eine auf das ausgewählte Schreibvorkompensierungssignal (32a) ansprechende Erzeugungseinrichtung (36) zur Erzeugung eines vorkompensierten Taktes (Cp) aufweist, welcher an die Lese/SchreibEinrichtung (20) zur Steuerung des Schreibens durch die ausgewählte Kopf/Media-Kombination angelegt wird.

10. System nach Anspruch 9, bei welchem die Daten auf den Media als in variablem bestand erfolgende Magnetflußänderungen geschrieben werden und bei welchem jedes von der Auswahleinrichtung (32) ausgewählte Schreibvorkompensierungssignal (30a) auf der Basis der Datenmuster, die in der Nähe der zu schreibenden Flußänderung vorliegen, erzeugt wird.

11. System nach Anspruch 10, bei welchem die Schreibvorkompensierungssignale jeweils die Zeitänderung anzeigen, die vorzusehen ist, wenn eine Flußänderung mit der ausgewählten Kopf/Media-Kombination für verschiedene mögliche Datenmuster geschrieben wird, die unmittelbar vor und nach der zu schreibenden Flußänderung auftreten können.

12. Verfahren zur Durchführung einer Schreibvorkompensierung in einem Magnetmediaspeichersystem mit einer Kopf/Media-Anordnung (14) mit mehreren Kopf/Media-Kombinationen zum Schreiben und Lesen von digitalen Daten, wobei die Kopf/Media-Kombinationen relativ starke Variationen in ihren Leistungseigenschaften zeigen, wobei das Verfahren die Schritte aufweist:
– Schreibvorkompensierungsdaten auf den Media der Anordnung (14) zu schreiben, die Schreibvorkompensierungseigenschaften für die Kopf/Media-Kombinationen unter Berücksichtigung der Variationen in der Leistung definieren;
– für jede von einer ausgewählten Kopf/Media-Kombination durchzuführende Schreiboperation in den Schreibvorkompensierungsdaten auf ausgewählte Bitverschiebungsschreibvorkompensierungsdaten (32a) zuzugreifen, die der ausgewählten Kopf/Media-Kombination sowie dem zu schreibenden Datenmuster entsprechen;
– aus den ausgewählten Schreibvorkompensierungsdaten die Bitverschiebungsschreibvorkompensierungsveränderungen abzuleiten, die gegebenenfalls während des Schreibens bei der ausgewählten Kopf/Media-Kombination vorzusehen sind; und
– die Schreiboperation unter Verwendung der abgeleiteten Schreivorkompensierungsveränderungen durchzuführen; gekennzeichnet durch die weiteren Schritte,
– vor der Durchführung der Schreiboperationen die auf den Media aufgezeichneten Schreibvorkompensierungsdaten an einen Controller (10) zu übertragen;
– die übertragenen Schreibvorkompensierungsdaten im Controller (10) zu speichern; und
– für jede von einer ausgewählten Kopf/Media-Kombination durchzuführenden Schreiboperation in den an den Controller (10) übertragenen Schreibvorkompensierungsdaten auf die ausgewählten Bitverschiebungsschreibvorkompensierungsdaten (32a) zuzugreifen.

13. Verfahren nach Anspruch 12, bei welchem die Kopf/Media-Anordnung eine Scheiben/Kopf-Anordnung (14) ist, wobei jede Scheibe der Anordnung einen oder mehrere Köpfe enthält, die mit dieser zusammenwirken, um Daten in einer oder mehreren Spuren der Scheibe zu lesen und zu schreiben.

14. Verfahren nach Anspruch 13, bei welchem die Übertragung zum Startzeitpunkt erfolgt.

15. Verfahren nach Anspruch 12, mit dem Schritt, zu ermitteln, ob die aufgezeichneten Schreibvorkompensierungsdaten korrigiert zu werden brauchen.

16. Verfahren nach Anspruch 15, mit dem Schritt, die aufgezeichneten Schreibvorkompensierungsdaten zu ändern, falls die Erfassung ergibt, daß eine Korrektur notwendig ist.

17. Verfahren nach Anspruch 12, bei welchem die aufgezeichneten Schreibvorkompensierungsdaten mehrere Sätze von Schreibvorkompensierungsdaten (30a) umfassen, die jeweils den Schreivorkompensierungsdaten entsprechen, die für mehrere unterschiedliche Arten von akezptablen Kopf/Media-Leistungscharakteristiken vorzusehen sind.

18. Verfahren nach Anspruch 12, bei welchem die ausgewählten Schreibvorkompensierungsdaten (32a) mehrere Schreibvorkompensierungssignale aufweisen, die auf die Muster ansprechende Veränderungen repräsentieren, die zu verwenden sind, wenn die Schreibdaten die ausgewählte Kopf/Media-Kombination benutzen.

19. Verfahren nach Anspruch 18, bei welchem der beleitungsschritt eine aufeinanderfolgende Auswahl von einem der Schreibvorkompensierungssignale als Antwort auf die zu schreibenden Daten und eine Erzeugung eines vorkompensierten Taktes (Cp) als Antwort darauf umfaßt.

20. Verfahren nach Anspruch 19, bei welchem die Daten auf den Media als in variablem bestand zueinander auftretende Magnetflußänderungen geschrieben werden und bei welchem jede durch diesen Auswahlschritt durchgeführte Auswahl den Datenmustern zugrundeliegt, die in der Nähe der zu schreibenden Flußänderung auftreten.

21. Verfahren nach Anspruch 20, bei welchem die Schreibvorkompensierungssignale jeweils die Zeitveränderung anzeigen, die vorzusehen ist, wenn eine Flußänderung bei der ausgewählten Kopf/Media-Kombination für verschiedene mögliche Datenmuster geschrieben wird, die unmittelbar vor und nach der zu schreibenden Flußänderung auftreten können.

**Revendications**

1. Dispositif de stockage sur support magnétique comprenant :

– un ensemble tête/support (14) comprenant plusieurs combinaisons tête/support pour l'écriture et la lecture de données digitales,

– ledit ensemble possédant un support sur lequel sont enregistrées des données de précompensation d'écriture, lesdites données de précompensation d'écriture définissant des caractéristiques de précompensation d'écriture pour lesdites combinaisons tête/support prenant en compte les différences de performances entre lesdites combinaisons tête/support;

– un moyen de lecture/écriture (20) réalisant une opération d'écriture sur ledit support et

– un moyen de précompensation d'écriture (26) assurant une précompensation d'écriture pour ladite opération d'écriture; ledit moyen de lecture/écriture (20) étant prévu pour réaliser ladite opération d'écriture d'une façon prenant en compte la combinaison tête/support choisie aussi bien que la configuration des données à écrire; dispositif caractérisé par :

– un contrôleur (10) commandant lesdites combinaisons tête/support et comprenant ledit moyen de lecture/écriture (20) et ledit moyen de précompensation d'écriture (26);

– ledit moyen de précompensation (26) possédant un moyen de stockage de précompensation d'écriture (30) pour stocker les données de précompensation d'écriture;

– un moyen (12) de transfert des données de précompensation d'écriture enregistrées sur ledit support vers ledit moyen de stockage de précompensation d'écriture (30) pour un stockage avant la réalisation des opérations d'écriture et

– ledit moyen de précompensation d'écriture (26) étant opérationnel avant la réalisation d'une opération d'écriture par une combinaison tète/support choisie pour accéder, à partir dudit moyen de stockage de précompensation d'écriture (30), à des données choisies de précompensation d'écriture du décalage binaire (32a) correspondant à la combinaison tète/support choisie et aussi à la configuration des données à écrire;

– ledit moyen de lecture/écriture (20) étant sensible auxdites données choisies de compensation d'écriture du décalage binaire (32a).

2. Dispositif selon la revendication 1, comprenant un moyen d'enregistrement des données de précompensation d'écriture sur ledit support.

3. Dispositif selon la revendication 1, comprenant un moyen (34) pour déterminer si les données de précompensation d'écriture enregistrées doivent être corrigées.

4. Dispositif selon la revendication 3, comprenant un moyen pour modifier lesdites données de précompensation d'écriture enregistrées.

5. Dispositif selon la revendication 1, dans lequel les données de précompensation d'écriture enregistrées sont stockées dans ledit moyen de stockage de précompensation d'écriture (30) au démarrage.

6. Dispositif selon la revendication 1, dans lequel ledit ensemble tête/support est un ensemble disque-/tête (14), chaque disque dudit ensemble contenant une ou plusieurs têtes associées pour la lecture et l'écriture de données sur une ou plusieurs pistes du disque.

7. Dispositif selon la revendication 1, dans lequel les données de précompensation d'écriture enregistrées comprennent plusieurs ensembles de données de précompensation d'écriture (30a) correspondant respectivement aux données de précompensation d'écriture à fournir pour plusieurs types différents de caractéristiques tête/support acceptables et dans lequel lesdites données de précompensation d'écriture choisies (32a) comprennent un desdits ensembles choisi sur la base de ladite combinaison tête/support choisie.

8. Dispositif selon la revendication 1, dans lequel lesdites données de précompensation d'écriture choisies (32a) comprennent plusieurs signaux de précompensation d'écriture représentant des modifications sensibles à la configuration à utiliser lors de l'écriture des données via la combinaison tête/support choisie.

9. Dispositif selon la revendication 8, dans lequel ledit moyen de précompensation d'écriture (26) comprend un sélecteur (32) pour sélectionner successivement un desdits signaux de précompensation d'écriture (30a) en réponse aux données à écrire et un générateur (36) sensible au signal de précompensation d'écriture choisie (32a) pour générer une horloge précompensée (Cp) qui est appliquée audit moyen de lecture/écriture (20) pour commander l'écriture par ladite combinaison tête/support choisie.

10. Dispositif selon la revendication 9, dans lequel des données sont écrites sur ledit support comme variations du flux magnétique espacées de façon variable et dans lequel chaque signal de précompensation d'écriture (30a) choisi par ledit sélecteur (32) est obtenu sur la base des configurations de données apparaissant au voisinage de la variation de flux à écrire.

11. Dispositif selon la revendication 10, dans lequel lesdits signaux de précompensation d'écriture indiquent respectivement la modification du calage à prévoir lors de l'écriture d'une variation de flux par la combinaison tête/support choisie pour diverses configurations de données possibles, ce qui peut apparaître juste avant et après la variation de flux à écrire.

12. Procédé de précompensation d'écriture dans un dispositif de stockage sur support magnétique muni d'un ensemble tête/support (14) comprenant plusieurs combinaisons tête/support pour l'écriture et la lecture de données digitales, dans lequel lesdites combinaisons tête/support présentent des variations relativement grandes de caractéristiques, ledit procédé comprenant :

– l'enregistrement de données de précompensation d'écriture sur un support dudit ensemble (14) définissant des caractéristiques de précompensation d'écriture pour lesdites combinaisons tête/support prenant en compte lesdites variations de performances :

– pour chaque opération d'écriture à réaliser par la combinaison tête/support choisie, l'accession, à partir desdites données de précompensation d'écriture, de données choisies de précompensation d'écriture du décalage binaire (32a) correspondant à la combinaison tête/support choisie aussi bien qu'à la configuration des données à écrire;

– la dérivation, à partir desdites données de compensation d'écriture choisies, des modifications de précompensation d'écriture du décalage binaire à prévoir, s'il y a lieu, lors de l'écriture par la combinaison tête/support choisie et

– la réalisation de ladite opération d'écriture à l'aide des modifications de précompensation d'écriture dérivées; procédé caractérisé par les étapes supplémentaires suivantes :

– avant la réalisation des opérations d'écriture, le transfert des données de précompensation d'écriture enregistrées sur ledit support vers un contrôleur (10);

– le stockage des données de précompensation d'écriture transférées dans ledit contrôleur (10) et

– pour chaque opération d'écriture à réaliser par la combinaison tête/support choisie, l'accession, à partir desdites données de précompensation d'écriture transférées audit contrôleur (10), auxdites données choisies de précompensation d'écriture du décalage binaire (32a).

13. Procédé selon la revendication 12, selon lequel ledit ensemble tête/support est un ensemble disque/tête (14), chaque disque dudit ensemble contenant une ou plusieurs têtes associées pour la' lecture et l'écriture de données sur une ou plusieurs pistes du disque.

14. Procédé selon la revencation 13, selon lequel ledit transfert s'opère au démarrage.

15. Procédé selon la revendication 12, comprenant une étape pour déterminer si les données de précompensation d'écriture enregistrées doivent être corrigées.

16. Procédé selon la revendication 15, comprenant une étape de modification des données de précompensation d'écriture enregistrées si ladite détermination indique la nécessité d'une correction.

17. Procédé selon la revendication 12, selon lequel les données de précompensation d'écriture enregistrées comprennent plusieurs ensembles de données de précompensation d'écriture (30a) correspondant respectivement aux données de précompensation d'écriture à prévoir pour plusieurs types différents de caractéristiques tête/support acceptables.

18. Procédé selon la revendication 12, selon lequel lesdites données de précompensation d'écriture choisies (32a) comprennent plusieurs signaux de précompensation d'écriture représentant des modifications sensibles à la configuration à utiliser lors de l'écriture de données à l'aide de la combinaison tête/support choisie.

19. Procédé selon la revendication 18, selon lequel ladite dérivation comprend une sélection successive d'un desdits signaux de précompensation d'écriture en réponse aux données à écrire et une génération, en réponse, d'une horloge précompensee (Cp).

20. Procédé selon la revendication 19, selon lequel des données sont écrites sur ledit support comme variations du flux magnétique espacées de façon variable et selon lequel chaque sélection effectuée par ledit sélecteur est basée sur les configurations de données apparaissant au voisinage de la variation de flux à écrire.

21. Procédé selon la revendication 20, selon lequel lesdits signaux de précompensation d'écriture indiquent respectivement la modification du calage à prévoir lors de l'écriture d'une variation de flux par la combinaison tête/support choisie pour diverses configurations de données possibles pouvant apparaître juste avant et après la variation de flux à écrire.

_Fig.1_

I/O BUS 12

DISK DRIVE INTERFACE 16

DISK CONTROLLER

10

DISK DRIVE

DISK DRIVE

14

_Fig.2_

ENCODED PRECOMP. DATA TO SELECTED HEAD

RECORDED WRITE PRECOMP. DATA FROM HDA'S (TRANSMITTED AT START-UP)

READ DATA FROM SELECTED HEAD

READ DATA

TO/FROM I/O BUS 14

WRITE DATA

READ/ WRITE ADDRESS

READ/ WRITE CIRCUITRY

ENCODED WRITE DATA

HEAD/TRACK DATA

PRECOMP. CLOCK $C_p$

WRITE PRECOMP. CIRCUITRY

20

26

20a

HEAD POSITION CONTROL CIRCUITRY

22

C

HEAD POSITION FEEDBACK DATA

CLOCK CIRCUITRY

24

HEAD POSITION CONTROL SIGNALS

## Fig.3

RECORDED
WRITE PRECOMP.
DATA FROM HDA'S
(TRANSMITTED AT START-UP)

30a

32

HEAD/TRACK
DATA

WRITE
PRECOMP.
STORAGE

30

MUX

32a

35

PRECOMP.
REG.

35a

C

34a

34

ENCODED
WRITE DATA

DATA
PATTERN
DETECTOR

$c_i$

36

DELAY
GEN.

$c_p$

## Fig.4

I/O BUS 12

DISK DRIVE
INTERFACE
16

DISK
CONTROLLER

WRITE
PRECOMP.
DATA

10

DISK
DRIVE

DISK
DRIVE

14

40

DIAGNOSTIC
CIRCUITRY